(19) Europäisches Patentamt
European Patent Office
Office européen des brevets

(11) EP 3 805 164 A1

(12) **EUROPEAN PATENT APPLICATION**
published in accordance with Art. 153(4) EPC

(43) Date of publication:
**14.04.2021 Bulletin 2021/15**

(21) Application number: **19816074.9**

(22) Date of filing: **30.05.2019**

(51) Int Cl.:
***C02F 11/147*** *(2019.01)* ***B01D 21/01*** *(2006.01)*
***C08F 220/34*** *(2006.01)*

(86) International application number:
**PCT/JP2019/021493**

(87) International publication number:
**WO 2019/235345 (12.12.2019 Gazette 2019/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.06.2018 JP 2018108932**

(71) Applicant: **Kurita Water Industries Ltd.**
**Tokyo 164-0001 (JP)**

(72) Inventors:
- **SATO, Shigeru**
  **Tokyo 164-0001 (JP)**
- **SEKIGUCHI, Shihoko**
  **Tokyo 164-0001 (JP)**
- **WATANABE, Minoru**
  **Tokyo 160-0023 (JP)**

(74) Representative: **Becker, Eberhard**
**Becker & Kurig Partnerschaft**
**Patentanwälte PartmbB**
**Bavariastrasse 7**
**80336 München (DE)**

# (54) SLUDGE DEHYDRATION AGENT AND SLUDGE DEHYDRATION METHOD

(57) Provided is a sludge dehydration agent which enables the formation of stiff and coarse flocs even when added in a relatively small amount, has excellent gravity filtration properties, enables the production of a dehydrated cake having a low water content, and also enables an efficient dehydration treatment. A sludge dehydration agent comprising a polymer having a constituent unit derived from a cationic monomer, wherein the colloid equivalent value decrease rate of the polymer, which is calculated from mathematical formula 1, is 10% or more. (In mathematical formula 1, the colloid equivalent value (I) is a colloid equivalent value at pH 4 which is measured in deionized water by a colloid titration method, and the colloid equivalent value (II) is a colloid equivalent value at pH 4 which is measured in salt water having a concentration of 0.01 mol/Lby a colloid titration method.)

EP 3 805 164 A1

## Description

[Technical Field]

The present invention relates to a sludge dehydration agent suitable for a sludge dehydration treatment and a sludge dehydration method using the sludge dehydration agent.

[Background Art]

Cationic polymer flocculants are generally used for sludge dehydration treatments that are mainly used for excess sludges in food factories, chemical factories, and the like and mixed sludges in human waste treatment plants and the like. However, with the increase in the amount of sludge generated and changes in sludge properties in recent years, dehydration has become difficult and there is a strong demand for improving dehydration effects such as gravity filtration properties.

In the related art, regarding cationic polymer flocculants added to sludges, dimethylaminoethyl (meth)acrylate or its methyl chloride quaternary compounds and the like have been mainly used, but in order to further improve the dehydration effect, for example, those shown in Patent Literature 1 to 5 have been proposed in addition to such a treatment using a cationic polymer flocculant.

Patent Literature 1 describes that an ionic water-soluble polymer obtained by granulating a water-in-oil type emulsion liquid through a drying process and having a charge inclusion rate of 35 to 90% is subjected to a sludge dehydration treatment.

In addition, Patent Literature 2 and 3 describe that a flocculating treatment agent in which a combination of two types of crosslinkable water-soluble ionic polymers, one having a high charge inclusion rate and one having a low charge inclusion rate, is applied as a sludge dehydration agent.

In addition, Patent Literature 4 discloses a sludge dehydration agent including a mixture containing an amidine polymer, a crosslinked cationic polymer, and a non-crosslinked cationic polymer, and Patent Literature 5 discloses a sludge treatment method in which an inorganic flocculant is added and an amphoteric polymer flocculant is then added.

[Citation List]

[Patent Literature]

[Patent Literature 1]
Japanese Patent Laid-Open No. 2009-280649
[Patent Literature 2]
Japanese Patent Laid-Open No. 2005-144346
[Patent Literature 3]
PCT International Publication No. WO 2008/015769
[Patent Literature 4]
Japanese Patent Laid-Open No. 2011-224420
[Patent Literature 5]
Japanese Patent Laid-Open No. S63-158200

[Summary of Invention]

[Technical Problem]

However, in the conventional technologies described above, the sludge dehydration treatment is not always efficiently performed because flocs formed may be small, or adjustment of the balance between addition of two types of chemical may be complicated, and the dehydration effect may not be stable.

In Patent Literature 3, the crosslinked polymer exists in a "packing density" molecular form in which extension of molecules in water is restricted due to crosslinking, and accordingly, there are problems such as an increase in the amount of the sludge dehydration agent that needs to be added for sludges to flocculate. However, the relationship between extension of molecules in water in the polymer and the sludge dehydration effect, which is the basis therefor, has not been sufficiently clarified. In addition, the fact is that almost no studies regarding a physical property of a polymer which can be used as an index of a polymer extension state have been performed.

Therefore, the present invention has been made in order to address the above problems, and an objective of the present invention is to provide a sludge dehydration agent in which, even if a relatively small amount is added, stiff and coarse flocs are formed, a dehydrated cake having excellent gravity filtration properties and a low water content can be obtained, and an efficient dehydration treatment can be performed.

[Solution to Problem]

The inventors conducted extensive studies in order to achieve the above objectives, and as a result, found that, as long as a polymer has a property in which its colloid equivalent value decrease rate is a specific value or more when an ambient environment of a polymer as a sludge dehydration agent changes from an environment of deionized water to an environment of 0.01 mol/L salt water having an electrical conductivity close to that of sludge, even if a relatively small amount is added, a strong sludge dehydration effect is exhibited, and completed the present invention. Specifically, the present invention is as follows.

[1] A sludge dehydration agent which contains a polymer having a constituent unit derived from a cationic monomer, wherein a colloid equivalent value decrease rate of the polymer calculated by the following Mathematical Formula 1 is 10% or more:
[Math. 1]

Mathematical Formula 1

$$\text{Colloid equivalent value decrease rate (\%)} = \left(1 - \frac{\text{Colloid equivalent value (II)}}{\text{Colloid equivalent value (I)}}\right) \times 100$$

(in Mathematical Formula 1, the colloid equivalent value (I) is a colloid equivalent value at a pH of 4 measured in deionized water using a colloid titration method; and the colloid equivalent value (II) is a colloid equivalent value at a pH of 4 measured in 0.01 mol/L salt water using a colloid titration method).
[2] The sludge dehydration agent according to [1],
wherein the polymer has an intrinsic viscosity of 0.5 to 5.0 dL/g in a 1 mol/L aqueous sodium nitrate solution at 30°C.
[3] The sludge dehydration agent according to [1] or [2],
wherein monomers constituting the polymer are composed of 1 to 100 mol% of a cationic monomer represented by the following General Formula (1), 0 to 99 mol% of a nonionic monomer, and 0 to 99 mol% of an anionic monomer represented by the following General Formula (2):

[Chem. 1]

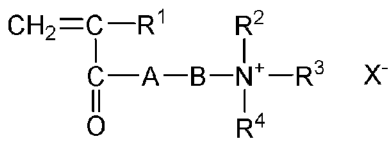

(1)

(in Formula (1), $R^1$ represents a hydrogen atom or a methyl group, $R^2$ and $R^3$ each independently represent an alkyl group, alkoxy group or benzyl group having 1 to 3 carbon atoms, $R^4$ represents a hydrogen atom or an alkyl group, alkoxy group or benzyl group having 1 to 3 carbon atoms; A represents an oxygen atom or an NH group, and B represents an alkylene group having 2 to 4 carbon atoms; and $X^-$ represents an anion.)

[Chem. 2]

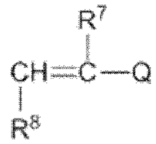

(2)

(in Formula (2), $R^7$ represents H or CH3, $R^8$ represents H, CH3, COOH or salts thereof; Q represents $SO_3H$, $C_6H_4SO_3H$, $CONHC(CH_3)_2CH_2SO_3H$, COOH or salts thereof.)

[4] The sludge dehydration agent according to any one of [1] to [3], wherein the sludge dehydration agent contains two or more of the polymers.

[5] The sludge dehydration agent according to any one of [1] to [4],
wherein the sludge dehydration agent contains at least one polymer having a colloid equivalent value decrease rate of less than 10%.

[6] A sludge dehydration method, including
adding the sludge dehydration agent according to any one of [1] to [5] to a sludge, and performing dehydration.

[Advantageous Effects of Invention]

According to the present invention, even if a relatively small amount is added, stiff and coarse flocs are formed, a dehydrated cake having excellent gravity filtration properties and a low water content can be obtained, and an efficient dehydration treatment can be performed.

[Description of Embodiments]

A sludge dehydration agent of the present invention and a sludge dehydration method using the sludge dehydration agent of the present invention will be described below in detail.
Here, in this specification, the term "(meth)acryl" includes "acryl" and/or "methacryl," and the same applies to "(meth)acrylate" and "(meth)acrylo."

[Sludge dehydration agent]

The sludge dehydration agent of the present invention contains a polymer having a constituent unit derived from a cationic monomer, and has a colloid equivalent value decrease rate of 10% or more of the polymer, which is calculated based on the following Mathematical Formula 1.
[Math. 2]

Mathematical Formula 1

$$\text{Colloid equivalent value decrease rate (\%)} = \left(1 - \frac{\text{Colloid equivalent value (II)}}{\text{Colloid equivalent value (I)}}\right) \times 100$$

In Mathematical Formula 1, the colloid equivalent value (I) is a colloid equivalent value at a pH of 4 measured in deionized water using a colloid titration method.
In addition, the colloid equivalent value (II) is a colloid equivalent value at a pH of 4 measured in 0.01 mol/L salt water using a colloid titration method.
Extensive studies were conducted with focus on the experimental facts that, when a polymer is allowed to exist as a sludge dehydration agent in a solvent having an electrical conductivity similar to that of the sludge, the colloid equivalent value is lower than when the polymer is allowed to exist in deionized water, and as a result, found that, when the decrease rate is 10% or more, stiff and coarse flocs are formed, and a strong sludge dehydration effect is exhibited even if a relatively small amount of the polymer is added as a sludge dehydration agent.
Here, "deionized water" means water in which a small amount of ionic impurities such as cations such as calcium and magnesium ions, and anions such as chlorine ions and nitrate ions contained in tap water have been removed by purification using an ion exchange resin or the like, and which has an electrical conductivity of 0.01 to 1 mS/m.

Here, the electrical conductivity of the sludge is generally in a range of 50 to 300 mS/m except for special sludges.

It is thought that, when a polymer is allowed to exist as a sludge dehydration agent in an environment in which almost no ions exist (environment with a low ion concentration), that is, in an environment with a low electrical conductivity, for example, when a polymer is allowed to exist in deionized water, since an influence of such an ambient environment on ionic groups in the polymer molecular chain is weak, an effect (shielding effect) of restricting repulsion between ionic groups in the polymer molecular chain is not exhibited, and ionic groups in the polymer molecular chain repel each other, and the polymer molecular chain has an extended form.

On the other hand, it is thought that, when a polymer is allowed to exist as a sludge dehydration agent in an environment in which ions coexist (environment with a high ion concentration), that is, in an environment with a high electrical conductivity, since an influence of such an ambient environment on ionic groups in the polymer molecular chain is strong, an effect (shielding effect) of restricting repulsion between ionic groups in the polymer molecular chain is exhibited, repulsion between ionic groups in the polymer molecular chain is restricted, and the polymer molecular chain has a contracted random coil form.

The reason why a strong sludge dehydration effect is obtained in the present invention is estimated to have some relationship with the change of the form of the polymer molecular chain from the "extended form" to the "contracted random coil form" due to the change in the ambient environment in which a polymer is allowed to exist as a sludge dehydration agent from an environment with a low electrical conductivity (for example, in deionized water) to an environment with a high electrical conductivity (for example, in sludge), and it is speculated that this is due to mechanisms such as the following (1) and (2).

(1) In deionized water, in the polymer as a sludge dehydration agent, ionic groups in the polymer molecular chain repel each other, and the polymer molecular chain has an "extended form," but in the sludge, repulsion between ionic groups in the polymer molecular chain is restricted, and the polymer molecular chain has a "contracted random coil form." As a result, it is inferred that, in the sludge, since it is difficult to detect charges present inside contracted polymer molecules, a charge density of the polymer apparently decreases, and the colloid equivalent value decreases. In addition, it is inferred that, focusing on the intrinsic viscosity which is an index indicating the extension state of polymer molecular chains, the intrinsic viscosity in a salt solvent with a certain concentration has a value in a certain range.

(2) It is speculated that, in a procedure of changing the form of the polymer molecular chain from an "extended form" to a "contracted random coil form," first, the polymer as a sludge dehydration agent is adsorbed on a sludge component (sludge particles) and promotes aggregation of sludge particles, and then the form of the polymer adsorbed on the sludge particles greatly contracts due to the influence of ions coexisting in the sludge so that stiff and coarse flocs are formed even if a relatively small amount of the polymer is added.

(Colloid equivalent value)

Generally, flocs are formed when the charge (for example, positive charge) of the polymer as a sludge dehydration agent electrostatically interacts with the charge (for example, negative charge) of the sludge component, and the charge of the sludge component is neutralized with the charge of the polymer. The charge of the polymer is obtained by measuring the colloid equivalent value. Here, the "colloid equivalent value" refers to a charge density (meq/g) of the polymer quantified in colloid titration, and refers to a cation density when the polymer is, for example, a cationic polymer.

It can be said that a polymer having a high colloid equivalent value has a strong charge neutralization ability, but it cannot be said that a polymer having a strong neutralization ability always has both an ability to form coarse flocs as a sludge dehydration agent and an ability to lower a water content of a dehydrated cake.

Additional extensive studies were performed based on the above inference and the like and it was found that, since the electrical conductivity in 0.01 mol/L salt water is about 112 mS/m, when an ambient environment in which the polymer is allowed to exist as a sludge dehydration agent is 0.01 mol/L salt water, an environment similar to that of sludge is created artificially and the same environment as in sludge can be assumed.

Specifically, it is found that, if a polymer has a colloid equivalent value decrease rate (%) of 10% or more, which is calculated by assigning a colloid equivalent value (I) at a pH of 4 measured in deionized water using a colloid measuring method and a colloid equivalent value (II) at a pH of 4 measured in 0.01 mol/L salt water assumed in the sludge using a colloid measuring method, to the following Mathematical Formula 1, an efficient dehydration treatment is can be performed, and the present invention is completed.

Here, the colloid equivalent value (I) of deionized water is generally in a range of 0 to 0.05 meq/g, and the colloid equivalent value (II) of 0.01 mol/L of salt water is generally in a range of 0.05 to 0.1 meq/g.

[Math. 3]

Mathematical Formula 1

$$\text{Colloid equivalent value decrease rate (\%)} = \left(1 - \frac{\text{Colloid equivalent value (II)}}{\text{Colloid equivalent value (I)}}\right) \times 100$$

Here, in the present invention, the method of adjusting the colloid equivalent value decrease rate to be in a specified range (10% or more) of the present invention is not particularly limited, and, for example, the value can be adjusted in consideration of the following aspects.

It is speculated that, in order to adjust the colloid equivalent value decrease rate to 10% or more, by considering the type of a polymerization initiator and a crosslinking agent used for polymer synthesis, a compositional ratio of monomers constituting the polymer, reaction heat during polymer synthesis, a polymer synthesis method and synthesis conditions, and the like, adjustment can be appropriately performed.

Specifically, it is thought that, in consideration of the following aspects, appropriate adjustment can be performed.

- A polymer synthesized such that a degree of crosslinking is relatively high tends to have a higher colloid equivalent value decrease rate.
- A polymer synthesized such that a proportion of cationic monomers as a component constituting the polymer is larger tends to have a higher colloid equivalent value decrease rate.
- A polymer synthesized such that the form of the polymer has a certain emulsion form tends to have a higher colloid equivalent value decrease rate.

The colloid equivalent value decrease rate of the polymer as the sludge dehydration agent is 10% or more, preferably 15 to 60%, more preferably 15 to 50%, still more preferably 15 to 40%, and yet more preferably 15 to 30%.

When the colloid equivalent value decrease rate is less than 10%, the floc diameter is small, a 20-second filtration amount is small, the amount of SS leakage is large, there is a risk of a large cake water content, and there is a risk of deterioration of the sludge dehydration effect.

Here, for the "colloid equivalent value at a pH of 4 measured using a colloid titration method," two types of polymer aqueous solutions with a pH of 3 and a pH of 5 are prepared, titration amounts are obtained by the colloid titration method, and respective colloid equivalent values are calculated from the titration amounts. Regarding two types of polymer aqueous solutions with a pH of 3 and a pH of 5, the pH value is measured after titration is completed, the measured pH value is plotted on the X axis of the graph and the colloid equivalent value calculated above is plotted on the Y axis of the graph. A colloid equivalent value at a value corresponding to a pH of 4 is read from a straight line connecting two points plotted in the graph and designated as a colloid equivalent value (meq/g) at a pH of 4.

The indicator used for colloid titration is not particularly limited, and toluidine blue is preferably used. In addition, the titration solution used for colloid titration is not particularly limited, and a polyvinyl potassium sulfate standard solution is preferably used.

(Intrinsic viscosity)

As described in the description of the reason why a strong sludge dehydration effect is obtained in the present invention, it is inferred that the dehydration effect of the present invention has a relationship with an extension state of polymer molecular chains, and the value of the intrinsic viscosity in the salt solution with a certain concentration depends on a degree of extension or contraction of polymer molecular chains.

It is well known that there is an intrinsic viscosity as a physical property of a polymer, which has a relationship with such a degree of extension or contraction of polymer molecular chains, and particularly, regarding an electrolyte polymer having ionic groups such as a sludge dehydration agent, the intrinsic viscosity in a salt solution with a certain concentration may be measured.

Here, regarding an index for determining a degree of extension or contraction of polymer molecular chains in the salt solution with a certain concentration, additional extensive studies have been conducted and as a result, it has been found that the polymer of the present invention satisfies a requirement in which the colloid equivalent value decrease rate specified in the present invention is 10% or more, and also satisfies a requirement in which the intrinsic viscosity in a 1 mol/L aqueous sodium nitrate solution at 30°C is 0.5 to 5.0 dL/g, and thus a more efficient dehydration treatment is easily performed.

The intrinsic viscosity also serves as an index for the molecular weight from the degree of extension or contraction of polymer molecular chains, and a larger polymer molecular weight indicates a higher intrinsic viscosity. However, since the intrinsic viscosity is also influenced by the structure of the monomers as polymer constitutional units, polymerization

conditions, and the like, it does not always correspond to a magnitude of the molecular weight.

When the polymer of the present invention satisfies a requirement in which the colloid equivalent value decrease rate specified in the present invention is 10% or more, and also satisfies a requirement in which the intrinsic viscosity in a 1 mol/L aqueous sodium nitrate solution at 30°C is 0.5 to 5.0 dL/g, stiff and coarse flocs are formed, a dehydrated cake having excellent gravity filtration properties and a low water content can be obtained, and a more efficient dehydration treatment is easily performed.

The intrinsic viscosity of the polymer of the present invention in a 1 mol/L aqueous sodium nitrate solution at 30°C is preferably 0.5 to 5.0 dL/g, more preferably 0.7 to 4.5 dL/g, and still more preferably 3.0 to 4.5 dL/g.

The intrinsic viscosity is represented by [η], and is a value calculated using the following Huggins formula.

$$\text{Huggins formula: } \eta_{SP}/C=[\eta]+k'[\eta]^2C$$

In the above formula, $\eta_{SP}$ represents a specific viscosity (=$\eta_{rel}$-1), k' represents a Huggins constant, C represents a polymer sample solution concentration, and $\eta_{rel}$ represents a relative viscosity.

Here, the Huggins constant k' is a constant that is determined according to the type of the polymer and the type of the solvent, and specifically, as can be understood from the formula, it can be obtained by the slope when the following relationship of $\eta_{SP}$/C vs C is plotted.

Polymer sample solutions with different concentrations are prepared, specific viscosities $\eta_{SP}$ of the polymer sample solutions with respective concentrations are obtained, the relationship of $\eta_{SP}$/C vs C is plotted, and an intercept value obtained by extrapolating C to 0 is an intrinsic viscosity [η].

The specific viscosity $\eta_{SP}$ is obtained by a method as shown in examples described below.

[Monomers constituting polymer]

The polymer as a sludge dehydration agent of the present invention contains a cationic monomer as an essential component, and may further contain a nonionic monomer and/or an anionic monomer.

(Cationic monomer)

The cationic monomer is preferably a compound represented by the following General Formula (1).

[Chem. 3]

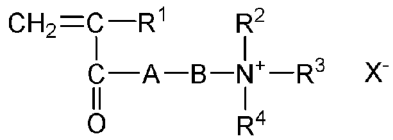

(1)

In Formula (1), $R^1$ represents a hydrogen atom or a methyl group, $R^2$ and $R^3$ each independently represent an alkyl group, alkoxy group or benzyl group having 1 to 3 carbon atoms, and $R^4$ represents a hydrogen atom or an alkyl group, alkoxy group or benzyl group having 1 to 3 carbon atoms. A represents an oxygen atom or an NH group, and B represents an alkylene group having 2 to 4 carbon atoms. $X^-$ represents an anion, and is preferably a chlorine ion, a bromine ion, an iodine ion, $1/2 \cdot SO_4^-$ or $CH_3SO_4^-$.

Examples of cationic monomers include (meth)acryloyloxyalkyl quaternary ammonium salts such as 2-((meth)acryloyloxy)ethyltrimethylammonium chloride, and 2-((meth)acryloyloxy)ethyldimethylbenzylammonium chloride; (meth)acryloyloxyalkyl tertiary amine salts such as 2-((meth)acryloyloxy)ethyldimethylamine sulfate or hydrochloride, and 3-((meth)acryloyloxy)propyldimethylamine hydrochloride; and (meth)acryloylaminoalkyl quaternary ammonium salts such as 3-((meth)acryloylamino)propyltrimethylammonium chloride, and 3-((meth)acryloylamino)propyltrimethylammonium methylsulfate. Theses cationic monomers may be used alone or two or more thereof may be used in combination.

Among these cationic monomers, (meth)acryloyloxyalkyl quaternary ammonium salts are preferable, and particularly, 2-((meth)acryloyloxy)ethyltrimethylammonium chloride is more preferable and 2-(acryloyloxy)ethyltrimethylammonium chloride is still more preferable because they have excellent polymerizability and a desired polymer as a sludge dehydration agent is thereby easily obtained.

(Nonionic monomer)

Examples of nonionic monomers include amides such as (meth)acrylamide and N,N-dimethyl(meth)acrylamide; vinyl cyanide compounds such as (meth)acrylonitrile; (meth)acrylic acid alkyl esters such as methyl (meth)acrylate and ethyl (meth)acrylate; vinyl esters such as vinyl acetate; and aromatic vinyl compounds such as styrene, $\alpha$-methylstyrene, and p-methylstyrene. These nonionic monomers may be used alone or two or more thereof may be used in combination.
Among these nonionic monomers, amides are preferable, and particularly, (meth)acrylamide is more preferable and acrylamide is still more preferable because they have excellent water solubility, it is easy to adjust a compositional ratio of monomers in the polymer therewith, and a desired polymer as a sludge dehydration agent is easily obtained therewith.

(Anionic monomer)

The anionic monomer is preferably a compound represented by the following General Formula (2).

[Chem. 4]

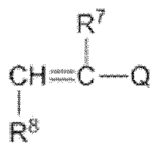

(2)

In Formula (2), $R^7$ represents H or CH3, $R^8$ represents H, CH3, COOH or salts thereof; and Q represents $SO_3H$, $C_6H_4SO_3H$, $CONHC(CH_3)_2CH_2SO_3H$, COOH or salts thereof. Examples of salts used here include a lithium salt, a sodium salt, and a potassium salt.
Examples of anionic monomers include vinyl sulfonic acid, vinylbenzene sulfonic acid, 2-acrylamide-2-methylpropanesulfonic acid, (meth)acrylic acid, itaconic acid, maleic acid, and alkali metal salts thereof. These anionic monomers may be used alone or two or more thereof may be used in combination.
Among these, acrylic acid is preferable because a desired polymer as a sludge dehydration agent can be easily obtained therewith.
In the present invention, a monomer composition of the polymer constitutional units preferably includes 1 to 100 mol% of cationic monomers, 0 to 99 mol% of nonionic monomers, and 0 to 99 mol% of anionic monomers, and more preferably 35 to 95 mol% of cationic monomers, 15 to 65 mol% of nonionic monomers, and 0 to 15 mol% of anionic monomers.
When the monomer composition of the polymer constitutional units is within such a range, even if the addition amount is equal to or smaller than that of conventional sludge dehydration agents, coarse flocs are formed, and additionally, flocculation flocs having excellent flocculation between flocs are formed, and thus a dehydrated cake having excellent gravity filtration properties and a low water content can be obtained, and an efficient dehydration treatment is easily performed.
As described above, the sludge dehydration agent of the present invention contains the polymer specified in the present invention, that is, a polymer having a colloid equivalent value decrease rate of 10% or more.
The content of the polymer specified in the present invention is preferably 90 to 100 mass%, more preferably 95 to 100 mass%, and still more preferably 100 mass% with respect to 100 mass% of the sludge dehydration agent.
When the content of the polymer specified in the present invention is within the above range, even if a relatively small amount is added, stiff and coarse flocs are formed, a dehydrated cake having excellent gravity filtration properties and a low water content can be obtained, and an efficient dehydration treatment is easily performed.

(Combination of two or more types of polymers of the present invention)

The sludge dehydration agent of the present invention contains at least one type of the above polymer of the present invention, but may contain two or more types of the above polymer of the present invention.
When the sludge dehydration agent of the present invention contains two or more types of the above polymer of the present invention, the two or more types of polymers may be mixed as a single agent in a solvent and used as a polymer aqueous solution, or the two or more types of polymers may be separately mixed in a solvent to prepare separate polymer aqueous solutions, and the solutions may then be mixed and used.

(Combination with other polymers)

The sludge dehydration agent of the present invention may contains at least one type of the above polymer of the present invention, but may contain a polymer other than the polymer of the present invention, that is, at least one type of polymer in which the colloid equivalent value decrease rate is less than 10%.

The polymer other than the polymer of the present invention, that is, the polymer in which the colloid equivalent value decrease rate is less than 10%, may be a polymer in which the intrinsic viscosity in a 1 mol/L aqueous sodium nitrate solution at 30°C is 0.5 to 5.0 dL/g, or may be another polymer.

The polymer other than the polymer of the present invention may be a cationic polymer, an anionic polymer, or an amphoteric polymer.

Examples of cationic polymers include a polymer containing at least one selected from the group consisting of an amidine unit, a vinylamine unit, an allylamine unit, and an ethyleneimine unit as a constituent unit.

In addition, examples of cationic polymers include homopolymers composed of one selected from among cationic monomers such as a diethylaminoethyl (meth)acrylate methyl chloride quaternary salt, a dimethylaminoethyl (meth)acrylate benzyl chloride quaternary salt, dimethylaminoethyl (meth)acrylate hydrochloride, and dimethylaminoethyl (meth)acrylate sulfate, copolymers composed of two or more selected therefrom, and copolymers of these cationic monomers and copolymerizable nonionic monomers; and homopolymers composed of one selected from among cationic monomers such as (meth)acrylamidopropyltrimethylammonium chloride, (meth)acrylamidopropyldimethylbenzylammonium chloride, dimethylaminopropyl(meth)acrylamide hydrochloride, dimethylaminopropyl(meth)acrylamide sulfate, and diallyl dimethyl ammonium chloride, copolymers composed of two or more selected therefrom, and copolymers of these cationic monomers and copolymerizable nonionic monomers.

Here, in addition to these, the cationic polymer may include, for example, a polyacrylamide Mannich modified product, and a polyacrylamide Hoffman degradation product.

Examples of anionic polymers include homopolymers composed of one selected from among anionic monomers such as (meth)acrylic acid, sodium (meth)acrylate, 2-acrylamide-2-methylpropanesulfonic acid and salts thereof, vinyl sulfonic acid and salts thereof, and vinyl sulfate and salts thereof, copolymers composed of two or more selected therefrom, and copolymers composed of these anionic monomers and copolymerizable nonionic monomers.

Examples of amphoteric polymers include copolymers of the cationic monomers exemplified above and the anionic monomers exemplified above and copolymers of these cationic monomers and anionic monomers and copolymerizable nonionic monomers.

Examples of nonionic monomers include acrylamide, methacrylamide, N-methyl acrylamide, N-ethyl acrylamide, N,N-dimethyl acrylamide, N-isopropyl acrylamide, N-methylol acrylamide, diacetone acrylamide, N-vinyl carboxylic acid amide, N-isopropenyl carboxylic acid amide, styrene, (meth)acrylonitrile, methyl (meth)acrylate, ethyl (meth)acrylate, hydroxyalkyl (meth)acrylate, and vinyl acetate.

(Other components)

As described above, the sludge dehydration agent in the present invention may contain a polymer other than the polymer of the present invention in addition to containing one or two or more types of the polymer of the present invention, but it may contain other components as long as the objective and effect of the present invention are not impaired.

Examples of other components include an inorganic flocculant, an organic coagulating agent, table salt, sodium sulfate, sulfamic acid, and sodium hydrogen sulfate.

General examples of inorganic flocculants include aluminum sulfate, polyiron sulfate, polyaluminum chloride, and ferric chloride, but the present invention is not limited thereto.

Regarding a particularly effective polymer in combination with an inorganic flocculant, an amphoteric polymer of the present invention in which an anionic group is introduced may be exemplified. In addition thereto, a combination of the polymer of the present invention and a polymer other than the polymer of the present invention (an anionic polymer and an amphoteric polymer) may be used.

General examples of organic coagulating agents include copolymers of polydiallyl dimethyl ammonium chloride, diallyl dimethyl ammonium chloride and acrylamide, and copolymers of polyethyleneimine, epichlorohydrin and a dialkylamine, but the present invention is not limited thereto.

The content of other components is preferably 0 to 10 mass%, more preferably 0 to 5 mass%, and still more preferably 0 mass% with respect to 100 mass% of the sludge dehydration agent.

When the content of the other components is within the above range, even if a relatively small amount is added, stiff and coarse flocs are formed, a dehydrated cake having excellent gravity filtration properties and a low water content can be obtained, and an efficient dehydration treatment can be performed.

[Method of producing polymer as sludge dehydration agent]

The polymer as the sludge dehydration agent can be produced by mixing monomers as a constituent unit of the polymer and a polymerization initiator, and as necessary, a crosslinking agent, and heating and polymerizing them.
When monomers as a constituent unit of the polymer are polymerized without adding a crosslinking agent, a polymer having a linear molecular structure can be obtained. In addition, when a crosslinking agent is added to polymerize monomers as a constituent unit of the polymer, a polymer having a crosslinked molecular structure can be obtained.

(Polymerization initiator)

Examples of polymerization initiators include persulfates such as ammonium persulfate and potassium persulfate; organic oxides such as benzoyl peroxide; and azo compounds such as azobisisobutyronitrile, azobiscyanovaleric acid, 2,2'-azobis(2-amidinopropane)dihydrochloride, 2,2'-azobis(2,4-dimethylvaleronitrile), 2,2'-azobis(4-methoxy-2,4-dimethylvaleronitrile), 2,2'-azobis(2-methylamidinopropane)dihydrochloride, 2,2'-azobis(2-methylpropionamidine)dihydrochloride, and 2,2'-azobis[2-(2-imidazolin-2-yl)propane]dihydrochloride.
The amount of the polymerization initiator added can be arbitrarily determined according to the type of monomers as polymer constitutional units, proportions thereof, and the like, and is generally about 0.001 to 0.1 mol% with respect to a total monomer amount.

(Crosslinking agent)

A crosslinking agent may be used as necessary. Examples of crosslinking agents include N,N'-methylenebis(meth)acrylamide, triallylamine, ethylene glycol di(meth)acrylate, polyethylene glycol di(meth)acrylate, and 1,3-butylene glycol di(meth)acrylate.
When a crosslinking agent is used, the addition amount can be arbitrarily determined according to the degree of solubility required for the polymer, characteristics of monomers and the polymerization initiator, an aspect of a polymerization method, and the like, but it is desirably 500 ppm by mass or less with respect to a total monomer amount. When the amount exceeds 500 ppm by mass, since a stiff crosslinked structure is formed, the water solubility of the polymer is significantly reduced.
The aspect of the polymerization method is not particularly limited, and examples therefore include an emulsion polymerization method, an aqueous solution polymerization method, and a suspension polymerization method.

(Emulsion polymerization method)

In the emulsion polymerization method, for example, an oil layer mixture containing an oily solvent and a surfactant is prepared, a monomer aqueous solution as polymer constitutional units is added to the prepared oil layer mixture, and the mixture is stirred and mixed, emulsified and polymerized. If the polymerization initiator is water-soluble, it may be mixed with a monomer aqueous solution, and if the polymerization initiator is oil-soluble, it may be added after emulsification. According to such a method, a polymer is obtained as a W/O type emulsion liquid. In addition, the polymer obtained as an emulsion liquid in this manner can be sprayed and dried using a dryer such as a spray dryer to form a powder, and additionally granulated to obtain a powdered or granular polymer.
Regarding the oily solvent used for preparing the above oil layer mixture, for example, mineral oils such as kerosene and light oil, and normal paraffin, isoparaffin, naphthenic oil and the like which are purified products thereof, and the like can be used, and synthetic oils, vegetable oils, and animal oils which have the same properties as the above oil or mixtures thereof can be used.
In addition, regarding the surfactant used for preparing the above oil layer mixture, nonionic surfactants, for example, sorbitan fatty acid esters such as sorbitan monooleate and sorbitan monostearate; polyoxyethylene alkyl ethers such as polyoxyethylene lauryl ether, and pentaoxyethylene oleyl ether; and the like are suitably used.

(Aqueous solution polymerization method)

In the aqueous solution polymerization method, for example, nitrogen gas is blown into the monomer aqueous solution as polymer constitutional units, and polymerization is performed while additionally allowing nitrogen gas in a gas phase to flow. The polymerization initiator is preferably water-soluble, and may be added to the monomer aqueous solution in advance or may be added to the monomer aqueous solution after nitrogen gas is blown.
In the case of an azo polymerization initiator, heating is performed, and when the temperature reaches a temperature at which the azo compound decomposes, radicals are generated and polymerization starts. In addition, in the case of a redox polymerization initiator, it is used as a combination of an oxidizing agent and a reducing agent, and

when the oxidizing agent and the reducing agent are mixed, radicals are generated and polymerization starts. According to such a method, a polymer aqueous solution or gel-like polymer product with a high concentration is obtained. It can be used after being diluted or can be used as a powdered polymer.

A method of forming a powdered polymer is not particularly limited, and examples thereof include a method in which a polymer aqueous solution or gel-like polymer product with a high concentration is cut using a cutting machine such as a cutter or scissors so that the polymer becomes fine, and heating and drying are then performed in an oven or the like, and the obtained solid polymer is crushed by a crusher such as a ball mill, a roll mill, a hammer mill, and a table mill to obtain a powdered polymer; and a method in which a polymer aqueous solution or gel-like polymer product with a high concentration is added to an organic solvent such as acetone, the polymer is finely cut using a cutting machine such as a cutter and scissors, the polymer is precipitated, and then vacuum-dried, and the obtained solid polymer is crushed by a crusher such as a ball mill, a roll mill, a hammer mill, and a table mill to obtain a powdered polymer. A powdered polymer that is dissolved or dispersed in water can be used.

[Sludge dehydration method]

In the sludge dehydration method of the present invention, the sludge dehydration agent is added to sludge mainly composed of excess sludge of sewage, mixed raw sludge, digested sludge, or excess sludge in food factories or chemical factories, or settled mixed sludge and mixed sludge in human waste treatment plant or the like, and the sludge is dehydrated.

According to such a sludge dehydration method, even if a relatively small amount is added, an excellent dehydration effect can be exhibited, stiff and coarse flocs can be formed, gravity filtration properties are excellent, and thus an efficient dehydration treatment can be realized.

When the content (mass%) of the suspended solids (SS) in the sludge is 0.4 to 4.0 mass%, the amount of the polymer as a sludge dehydration agent of the present invention added is preferably 20 to 1,600 mg/L, more preferably 50 to 1,200 mg/L, and still more preferably 60 to 800 mg with respect to a total volume (1 L) of the sludge.

Here, "content (mass%) of the suspended solids (SS)" refers to a proportion of the mass of the suspended solids with respect to the mass of the sludge as a dehydration treatment subject.

A method of adding a sludge dehydration agent is not particularly limited, and known methods of adding a sludge dehydration agent can be applied. Specifically, a method in which first, a polymer aqueous solution containing a polymer as a sludge dehydration agent with a predetermined concentration is prepared, the polymer aqueous solution prepared to have the predetermined concentration is added to sludge, and the mixture is stirred, for example, under conditions of 180 rpm for 30 seconds, and thus flocculation flocs are formed may be exemplified.

Here, regarding the solvent used for preparing a polymer aqueous solution, a solvent having a low electrical conductivity is preferably used. Specifically, a solvent having an electrical conductivity of 50 mS/m or less is preferably used, and examples of a solvent having such an electrical conductivity include deionized water, tap water, industrial water, and river water.

The concentration of the polymer aqueous solution used as the sludge dehydration agent is preferably 0.01 to 1.0 mass%, more preferably 0.03 to 0.6 mass%, and still more preferably 0.05 to 0.4 mass%.

When the concentration of the polymer aqueous solution is within the above range, even if the addition amount is equal to or smaller than that of conventional sludge dehydration agents, stiff and coarse flocs are formed, and thus a dehydrated cake having excellent gravity filtration properties and a low water content can be obtained, an efficient dehydration treatment can be performed.

(Dehydrator)

In the present invention, the polymer aqueous solution prepared to have the predetermined concentration is added to the sludge, and the mixture is stirred under predetermined conditions, and thus flocculation flocs are formed. Since the flocculation flocs are stiff and coarse, a dehydrated cake having excellent gravity filtration properties and a low water content can be obtained.

The dehydrator used for dehydrating the flocculation floc is not particularly limited, and examples thereof include a belt press, a centrifugal dehydrator, a screw press, a vacuum dehydrator, a filter press, and a multiple disk type.

Examples

According to the following examples, the present invention will be described in more detail, but the present invention is not limited to these examples.

Synthesis examples of polymers as sludge dehydration agents used in examples and comparative examples are shown below.

(1-1) Synthesis of polymer

(Synthesis Example 1) Polymer 1

<Process of preparing oil layer mixture>

156 g of normal paraffin as an oily solvent, 13 g of pentaoxyethylene oleyl ether and 13 g of sorbitan monooleate as a nonionic surfactant were put into a 1 L 4-neck separable flask including a stirrer, a cooling pipe, a nitrogen introduction pipe and a thermometer, and stirred and mixed to prepare an oil layer mixture.

<Mixing and emulsifying process>

Then, a monomer mixed aqueous solution containing 175 g of an aqueous solution containing 80 mass% of 2-(acryloyloxy)ethyltrimethylammonium chloride (DAA) as a cationic monomer, 34 g of acrylamide (AAM) as a nonionic monomer, 0.07 g of 2,2'-azobis(2-methylpropionamidine)dihydrochloride as a polymerization initiator and 111 g of pure water was added to the above oil layer mixture, and emulsified by stirring with a homogenizer.

<Emulsion polymerization process>

Nitrogen gas was blown into an emulsification liquid for 1 hour with stirring at room temperature. In addition, while allowing nitrogen gas in a gas phase to flow, the temperature was controlled to 45 to 65°C under a nitrogen gas atmosphere, and polymerization was performed for 15 hours to obtain a linear polymer 1 as a W/O type emulsion liquid.

(Synthesis Example 2) Polymer 2

A W/O type emulsion liquid was obtained in the same operations as in Synthesis Example 1 except that, in the mixing and emulsifying process of Synthesis Example 1, no 2,2'-azobis(2-methylpropionamidine)dihydrochloride as a polymerization initiator was used, 2.5 g of a hydrochloric acid aqueous solution containing 1.0 mass% of triallylamine as a crosslinking agent was added to a monomer mixed aqueous solution, and in the emulsion polymerization process of Synthesis Example 1, before nitrogen gas was blown, with stirring at room temperature, 2.0 g of a toluene solution containing 4.0 mass% of 2,2'-azobis(2,4-dimethylvaleronitrile) as a polymerization initiator was added to the emulsification liquid, while allowing nitrogen gas in a gas phase to flow, the temperature was controlled to 55 to 60°C under a nitrogen gas atmosphere, and polymerization was performed for 15 hours.

Next, the obtained W/O type emulsion liquid was sprayed and dried in a desktop spray dryer, and the following powdered crosslinked polymer 2 having a water amount of 5 mass% or less was obtained.

Here, regarding a hydrochloric acid aqueous solution containing 1.0 mass% of triallylamine as a crosslinking agent, 1.0 g of triallylamine was weighed out in a 100 mL beaker, about 50 mL of pure water was added, and a small amount of hydrochloric acid was added while the pH was measured, and after the pH was adjusted to 3 or less, the mixture was transferred to a 100 mL volumetric flask, and diluted to make up 100 mL, a hydrochloric acid aqueous solution containing 1.0 mass% of triallylamine was prepared.

(Synthesis Example 3) Polymer 3

<Process of preparing monomer aqueous solution>

150 g of pure water was put into a 500 mL 4-neck separable flask including a stirrer, a cooling pipe, a nitrogen introduction pipe and a thermometer, 35.5 g of acrylamide (AAM) as a nonionic monomer and 0.004 g of N,N'-methylenebisacrylamide as a crosslinking agent were added thereto and dissolved, and 97 g of an aqueous solution containing 80 mass% of 2-(acryloyloxy)ethyltrimethylammonium chloride (DAA) as a cationic monomer, and 7.2 g of acrylic acid (AA) as an anionic monomer were then added to prepare a monomer aqueous solution.

<Aqueous solution polymerization process>

Then, the 500 mL 4-neck separable flask was immersed in an ice bath, the temperature of the prepared monomer aqueous solution was set to 10°C or lower, 5.0 g of an aqueous solution containing 6.0 mass% of 2,2'-azobis[2-(2-imidazolin-2-yl)propane]dihydrochloride as a polymerization initiator was added and nitrogen gas was blown in the liquid for 1 hour. In addition, while allowing nitrogen gas in a gas phase to flow, under a nitrogen gas atmosphere, the 500 mL 4-neck separable flask was immersed in a constant temperature water tank at 55°C, polymerization was performed for

15 hours, and thereby a gel-like polymer product was obtained.

The gel-like polymer product was put into acetone and finely cut with scissors, the polymer was precipitated, and then vacuum-dried, the obtained solid polymer was crushed with a table mill, and thereby a powdered crosslinked polymer 3 was obtained.

(Synthesis Example 4) Polymer 4

A crosslinked polymer 4 as a W/O type emulsion liquid was obtained in the same operations as in Synthesis Example 1 except that, in the mixing and emulsifying process of Synthesis Example 1, 115 g of an aqueous solution containing 80 mass% of 2-(acryloyloxy)ethyltrimethylammonium chloride (DAA) as a cationic monomer, 51 g of acrylamide (AAM) as a nonionic monomer, and 0.06 g of 2,2'-azobis(2-methylpropionamidine)dihydrochloride as a polymerization initiator were used, and 0.007 g of N,N'-methylenebisacrylamide as a crosslinking agent was added to a monomer mixed aqueous solution.

(Synthesis Example 5) Polymer 5

A powdered crosslinked polymer 5 was obtained in the same operations as in Synthesis Example 3 except that, in the process of preparing a monomer aqueous solution of Synthesis Example 3, 43 g of acrylamide (AAM) as a nonionic monomer and 0.003 g of N,N'-methylenebisacrylamide as a crosslinking agent were used, no acrylic acid (AA) as an anionic monomer was used, and in the aqueous solution polymerization process of Synthesis Example 3, 7.2 g of an aqueous solution containing 6.0 mass% of 2,2'-azobis[2-(2-imidazolin-2-yl)propane]dihydrochloride as a polymerization initiator was used.

(Synthesis Example 6) Polymer 6

A linear polymer 6 as a W/O type emulsion liquid was obtained in the same operations as in Synthesis Example 1 except that, in the mixing and emulsifying process of Synthesis Example 1, 210 g of an aqueous solution containing 80 mass% of 2-(acryloyloxy)ethyltrimethylammonium chloride (DAA) as a cationic monomer, 15 g of acrylamide (AAM) as a nonionic monomer, and 0.05 g of 2,2'-azobis(2-methylpropionamidine)dihydrochloride as a polymerization initiator were used.

(Comparative Synthesis Example 1) Comparative Polymer 1

A powdered linear type Comparative Polymer 1 was obtained in the same operations as in Synthesis Example 3 except that, in the process of preparing a monomer aqueous solution of Synthesis Example 3, 28 g of acrylamide (AAM) as a nonionic monomer was used, no N,N'-methylenebisacrylamide as a crosslinking agent was used, 145 g of an aqueous solution containing 80 mass% of 2-(acryloyloxy)ethyltrimethylammonium chloride (DAA) as a cationic monomer was used, and no acrylic acid (AA) as an anionic monomer was used, and in the aqueous solution polymerization process of Synthesis Example 3, 0.1 g of 2,2'-azobis(2-methylpropionamidine)dihydrochloride as a polymerization initiator was used, and the temperature of the constant temperature water tank was set to 45°C .

(Comparative Synthesis Example 2) Comparative Polymer 2

A powdered crosslinked Comparative Polymer 2 was obtained in the same operations as in Synthesis Example 3 except that, in the process of preparing a monomer aqueous solution of Synthesis Example 3, 28 g of acrylamide (AAM) as a nonionic monomer, 0.3 g of a hydrochloric acid aqueous solution containing 1.0 mass% of triallylamine, as a crosslinking agent, and 145 g of an aqueous solution containing 80 mass% of 2-(acryloyloxy)ethyltrimethylammonium chloride (DAA) as a cationic monomer were used, no acrylic acid (AA) as an anionic monomer was used, and in the aqueous solution polymerization process of Synthesis Example 3, 0.08 g of 2,2'-azobis(2-methylpropionamidine)dihydrochloride as a polymerization initiator was used, and the temperature of the constant temperature water tank was set to 45°C.

(Comparative Synthesis Example 3) Comparative Polymer 3

A W/O type emulsion liquid was obtained in the same operations as in Synthesis Example 1 except that, in the mixing and emulsifying process of Synthesis Example 1, 115 g of an aqueous solution containing 80 mass% of 2-(acryloyloxy)ethyltrimethylammonium chloride (DAA) as a cationic monomer, and 51 g of acrylamide (AAM) as a nonionic monomer were used, no 2,2'-azobis(2-methylpropionamidine)dihydrochloride as a polymerization initiator was used,

0.001 g of N,N'-methylenebisacrylamide as a crosslinking agent was added to a monomer mixed aqueous solution, and in the emulsion polymerization process of Synthesis Example 1, before nitrogen gas was blown, with stirring at room temperature, 1.8 g of a toluene solution containing 4.0 mass% of 2,2'-azobis(2,4-dimethylvaleronitrile) as a polymerization initiator was added to the emulsification liquid, while allowing nitrogen gas in a gas phase to flow, the temperature was controlled to 55 to 60°C under a nitrogen gas atmosphere, and polymerization was performed for 15 hours.

Next, the obtained W/O type emulsion liquid was sprayed and dried in a desktop spray dryer, and the following powdered crosslinked Comparative Polymer 3 having a water amount of 5 mass% or less was obtained.

(Comparative Synthesis Example 4) Comparative Polymer 4

A crosslinked polymer 4 as a W/O type emulsion liquid was obtained in the same operations as in Synthesis Example 1 except that, in the mixing and emulsifying process of Synthesis Example 1, 115 g of an aqueous solution containing 80 mass% of 2-(acryloyloxy)ethyltrimethylammonium chloride (DAA) as a cationic monomer, 51 g of acrylamide (AAM) as a nonionic monomer, and 8.3 g of an aqueous solution containing 6.0 mass% of 2,2'-azobis[2-(2-imidazolin-2-yl)propane]dihydrochloride as a polymerization initiator were used, and 0.4 g of a hydrochloric acid aqueous solution containing 1.0 mass% of triallylamine as a crosslinking agent was added to a monomer mixed aqueous solution.

(Comparative Synthesis Example 5) Comparative Polymer 5

A crosslinked Comparative Polymer 5 as a W/O type emulsion liquid was obtained in the same operations as in Synthesis Example 1 except that, in the mixing and emulsifying process of Synthesis Example 1, 115 g of an aqueous solution containing 80 mass% of 2-(acryloyloxy)ethyltrimethylammonium chloride (DAA) as a cationic monomer, and 51 g of acrylamide (AAM) as a nonionic monomer were used, no 2,2'-azobis(2-methylpropionamidine)dihydrochloride as a polymerization initiator was used, and 0.4 g of a hydrochloric acid aqueous solution containing 1.0 mass% of triallylamine as a crosslinking agent was added to a monomer mixed aqueous solution, and in the emulsion polymerization process of Synthesis Example 1, before nitrogen gas was blown, with stirring at room temperature, 2.5 g of a toluene solution containing 4.0 mass% of 2,2'-azobis(4-methoxy-2,4-dimethylvaleronitrile) as a polymerization initiator was added to the emulsification liquid, and while allowing nitrogen gas in a gas phase to flow, under a nitrogen gas atmosphere, the temperature was controlled to 35 to 50°C, and polymerization was performed for 15 hours.

Polymers 1 to 6 obtained in Synthesis Examples 1 to 6 were used in examples, and Comparative Polymers 1 to 5 obtained in Comparative Synthesis Examples 1 to 5 were used in comparative examples. The commercially available Polymer A (commercially available from Kurita Water Industries Ltd., product name: Kurifix CP; linear type) was used in a comparative example.

The intrinsic viscosities and the colloid equivalent values of Polymers 1 to 6 used in examples, Comparative Polymers 1 to 5 used in comparative examples, and the commercially available Polymer A were measured according to the following methods, and the measurement results are summarized in Table 1.

(1-2) Intrinsic viscosity

The intrinsic viscosities of Polymers 1 to 6 obtained in Synthesis Examples 1 to 6, and Comparative Polymers 1 to 5 obtained in Comparative Synthesis Examples 1 to 5, and the commercially available Polymer A were determined as follows.

(1) Five Cannon-Fenske viscometers (No. 75 commercially available from Kusano Science Corporation) were immersed in a neutral detergent for glassware for 1 day or longer, and then sufficiently washed with deionized water, and dried.
(2) Some of the powdered polymers (Polymers 2, 3, and 5, Comparative Polymers 1, 2, and 3, and the commercially available Polymer A) were collected, about 0.3 g of the polymer was accurately weighed and added to deionized water with stirring with a magnetic stirrer at 500 rpm, and after stirring for 2 hours, the mixture was left for 15 to 24 hours, and stirring was performed again at 500 rpm for 30 minutes, and a total amount was then filtered with a glass filter 3G2, and thereby a 0.2 mass% polymer aqueous solution was prepared.
On the other hand, some of the emulsion liquid polymers (Polymers 1, 4, and 6, and Comparative Polymers 4 and 5) were collected, and added to a large excess amount of acetone, the polymer was precipitated and purification was performed, and the purified precipitated substance was vacuum-dried to obtain a powdered polymer. For the powdered polymer, a 0.2 mass% polymer aqueous solution was prepared in the same method as described above.
(3) 50 mL of a 2 mol/L aqueous sodium nitrate solution was added to 50 mL of the 0.2 mass% polymer aqueous solution, the mixture was stirred with a magnetic stirrer at 500 rpm for 20 minutes, and a 1 mol/L aqueous sodium nitrate solution with a polymer concentration of 0.1 mass% was then obtained. This solution was diluted with a 1

mol/L aqueous sodium nitrate solution, and polymer sample solutions with five steps of concentrations (0.02, 0.04, 0.06, 0.08, and 0.1 mass%) were prepared. Here, the 1 mol/L aqueous sodium nitrate solution (1 mol/L-$NaNO_3$) was used as a blank solution.

(4) The five viscometers were vertically installed in a constant temperature water tank whose temperature was adjusted to 30°C (within ±0.02°C). 10 mL of the blank solution was added to each viscometer with a Hall pipette, and then left for about 30 minutes in order to keep the temperature constant. Then, the liquid was sucked up using a syringe plug, and allowed to fall naturally, and a time taken to pass the marked line was measured using a stopwatch in units of 1/100 of a second. This measurement was repeated five times for each viscometer, and the average value was used as a blank value ($t_0$).

(5) 10 mL of the prepared polymer sample solution with each of five steps of concentrations was put into five viscometers for which the blank solution was measured, and left for about 30 minutes in order to keep the temperature constant. Then, the same operation as in the measurement of the blank solution was repeated three times, and the average value of passage times for each concentration was used as a measurement value (t).

(6) Based on the blank value $t_0$, the measurement value t, and the concentration C [mass/volume%] (=C[g/dL]) of the polymer sample solution, a relative viscosity $\eta_{rel}$, a specific viscosity $\eta_{SP}$, and a reduced viscosity $\eta_{SP}$/C [dL/g] were obtained by the following relational formula.

$$\eta_{rel}=t/t_0$$

$$\eta_{SP}=(t-t_0)/t_0=\eta_{rel}-1$$

Based on these values, according to the following Huggins formula, the intrinsic viscosity [η] of each polymer was calculated. Here, in the following formula, k' represents a Huggins constant.

$$\text{Huggins formula: } \eta_{SP}/C=[\eta]+k'[\eta]^2C$$

Each specific viscosity $\eta_{SP}$ of the polymer sample solutions with each of five steps of concentrations was obtained, C was plotted on the X axis of the graph, $\eta_{SP}$/C was plotted on the Y axis of the graph, and an intercept value obtained by extrapolating C to 0 was the intrinsic viscosity [η].

(1-3) Colloid equivalent value

The colloid equivalent values of Polymers 1 to 6 obtained in the Synthesis Examples 1 to 6, and Comparative Polymers 1 to 5 obtained in Comparative Synthesis Examples 1 to 5, and the commercially available Polymer A were obtained as follows.

(Colloid equivalent value in deionized water)

A 0.2 mass% polymer solution was prepared using deionized water having an electrical conductivity of 0.1 mS/m in the same method as in the measurement of the (1-2) intrinsic viscosity.

25 mL of a 0.2 mass% polymer solution was measured with a Hall pipette and put into a 200 mL measuring cylinder and diluted with deionized water, inversion stirring was performed thoroughly and 250 mg/L of a measurement sample was prepared.

Two conical beakers were prepared, 80 mL of deionized water was put into each conical beaker, 20 mL of a measurement sample was additionally added, and the mixture was sufficiently stirred with a magnetic stirrer to obtain respective titration target samples.

The pH of the titration target samples was adjusted by adding a hydrochloric acid aqueous solution or a sodium hydroxide aqueous solution while checking with a pH meter so that the pH of one titration target sample became 3 and the pH of the other titration target sample became 5.

1 to 2 drops of toluidine blue as an indicator were added in advance to the titration target samples whose pH was adjusted to 3 and 5 and stirring was performed.

Then, a 0.0025 mol/L (1/400 N) polyvinyl potassium sulfate standard solution was used as a titration solution, titration was performed while stirring at a speed of 2 mL/min, the color was changed from blue to pink, a point at which a pink color was maintained for 10 seconds or longer was set as an end point, and a titration amount AmL was determined.

On the other hand, titration was performed on deionized water in the same method as in the titration target sample, and a blank titration amount BmL was determined. The colloid equivalent value of the titration target samples whose pH was adjusted to 3 and 5 was calculated based on the results of the titration amount AmL and the blank titration amount BmL according to the following Mathematical Formula 2.
[Math. 4]

Mathematical Formula 2

$$\text{Colloid equivalent value (meq/g)}=\frac{\text{Titration sgent concentration (mol/L)}\times(\text{ Sample titration amount AmL}-\text{Blank titration amount BmL })}{\text{Amount of polymer in measurement sample (g)}}$$

Regarding each of the titration target samples whose pH was adjusted to 3 and 5, after titration was completed, the pH value was measured, the measured pH value was plotted on the X axis of the graph, and the colloid equivalent value calculated according to the above Mathematical Formula 2 was plotted on the Y axis of the graph.

The colloid equivalent value at a value corresponding to a pH of 4 was read from a straight line connecting 2 points plotted in the graph, and was used as a colloid equivalent value (meq/g) in deionized water at a pH of 4.

(Colloid equivalent value in salt water)

Salt (NaCl) was dissolved in deionized water (electrical conductivity: 0.1 mS/m) to prepare 0.01 mol/L salt water. The electrical conductivity of the salt water was 112 mS/m.

A 0.2 mass% polymer solution was prepared using 0.01 mol/L salt water in the same method as in the measurement of the (1-2) intrinsic viscosity.

The colloid equivalent value (meq/g) in 0.01 mol/L salt water at a pH of 4 was obtained in the same method as in the (colloid equivalent value in deionized water) except that 0.01 mol/L salt water was used in place of deionized water.

(Colloid equivalent value decrease rate)

The colloid equivalent value (I) at a pH of 4 measured in deionized water using a colloid titration method and the colloid equivalent value (II) at a pH of 4 measured in 0.01 mol/L salt water using a colloid titration method were assigned to the following Mathematical Formula 1, and the colloid equivalent value decrease rate (%) was calculated.
[Math. 5]

Mathematical Formula 1

$$\text{Colloid equivalent value decrease rate (\%)} = \left(1 - \frac{\text{Colloid equivalent value (II)}}{\text{Colloid equivalent value (I)}}\right) \times 100$$

Here, in Table 1, abbreviations of monomer compositions constituting the polymers are as follows. In addition, in Table 1, * attached to DAA as a cationic monomer represents the mass of an 80 mass% aqueous solution.

- Cationic monomers

DAA: 2-(acryloyloxy)ethyltrimethylammonium chloride
DAM: 2-(methacryloyloxy)ethyltrimethylammonium chloride

- Nonionic monomer

AAM: acrylamide

• Anionic monomer

AA: acrylic acid

[Table 1]

| | Composition of monomers constituting polymer | | | Polymerization initiator (addition amount) | Crosslinking agent (addition amount) | Type of polymer (molecular structure of polymer) | Intrinsic viscosity (dl/g) | Colloid equivalent value | | |
|---|---|---|---|---|---|---|---|---|---|---|
| | Cationic monomer (mol%) | Nonionic monomers (mol%) | Anionic monomer (mol%) | | | | | In deionized water (meq/g) | In 0.01 mol/L salt water (meq/g) | Decrease rate (%) |
| Synthesis Example 1 Polymer 1 | DAA (60) 175 g* | AAM (40) 34 g | - | 2,2'-azobis(2-methylpropionamidine) dihydrochloride (0.07 g) | - | Emulsion type (linear) | 4.2 | 3.82 | 3.01 | 21.2 |
| Synthesis Example 2 Polymer 2 | DAA (60) 175 g* | AAM (40) 34 g | - | toluene solution containing 4.0 mass% of 2,2'-azobis(2,4-dimethylvaleronitrile) (2.0 g) | hydrochloric acid aqueous solution containing 1.0 mass% of triallylamine (2.5 g) | Powder type (crosslinked) | 3.9 | 3.70 | 2.65 | 28.4 |
| Synthesis Example 3 Polymer 3 | DAA (40) 97 g* | AAM (50) 35.5 g | AA (10) 7.2 g | aqueous solution containing 6.0 mass% of 2,2'-azobis[2-(2-imidazolin-2-yl)propane] dihydrochloride (5.0 g) | N,N'-methylenebisacrylamide (0.004 g) | Powder type (crosslinked) | 0.8 | 3.12 | 2.68 | 14.1 |
| Synthesis Example 4 Polymer 4 | DAA (40) 115 g* | AAM (60) 51 g | - | 2,2'-azobis(2-methylpropionamidine) dihydrochloride (0.06 g) | N,N'-methylenebisacrylamide (0.007 g) | Emulsion type (crosslinked) | 5.4 | 2.80 | 2.18 | 22.1 |
| Synthesis Example 5 Polymer 5 | DAA (40) 97 g* | AAM (60) 43 g | - | aqueous solution containing 6.0 mass% of 2,2'-azobis[2-(2-imidazolin-2-yl)propane] dihydrochloride (7.2 g) | N,N'-methylenebisacrylamide (0.003 g) | Powder type (crosslinked) | 0.4 | 2.84 | 2.38 | 16.2 |
| Synthesis Example 6 Polymer 6 | DAA (80) 210 g* | AAM (20) 15 | - | 2,2'-azobis(2-methylpropionamidine) dihydrochloride (0.05 g) | - | Emulsion type (linear) | 4.5 | 4.68 | 4.10 | 12.4 |

(continued)

| | Composition of monomers constituting polymer | | | Polymerization initiator (addition amount) | Crosslinking agent (addition amount) | Type of polymer (molecular structure of polymer) | Intrinsic viscosity (dl/g) | Colloid equivalent value | | |
|---|---|---|---|---|---|---|---|---|---|---|
| | Cationic monomer (mol%) | Nonionic monomers (mol%) | Anionic monomer (mol%) | | | | | In deionized water (meq/g) | In 0.01 mol/L salt water (meq/g) | Decrease rate (%) |
| Comparative Synthesis Example 1 Comparative Polymer 1 | DAA (60) 145 g* | AAM (40) 28 g | - | 2,2'-azobis(2-methylpropionamidine) dihydrochloride (0.1 g) | - | Powder type (linear) | 3.2 | 4.05 | 4.00 | 1.2 |
| Comparative Synthesis Example 2 Comparative Polymer 2 | DAA (60) 145 g* | AAM (40) 28 g | - | 2,2'-azobis(2-methylpropionamidine) dihydrochloride (0.08 g) | hydrochloric acid aqueous solution containing 1.0 mass% of triallylamine (0.3 g) | Powder type (crosslinked) | 4.5 | 3.68 | 3.35 | 9.0 |
| Comparative Synthesis Example 3 Comparative Polymer 3 | DAA (40) 115 g* | AAM (60) 51 g | - | toluene solution containing 4.0 mass% of 2,2'-azobis(2,4-dimethylvaleronitrile) (1.8 g) | N,N'-methylenebisacrylamid (0.001 g) | Powder type (crosslinked) | 4.3 | 3.85 | 3.65 | 5.2 |
| Comparative Synthesis Example 4 Comparative Polymer 4 | DAA (40) 115 g* | AAM (60) 51 g | - | aqueous solution containing 6.0 mass% of 2,2'-azobis[2-(2-imidazolin-2-yl)propane] dihydrochloride (8.3 g) | hydrochloric acid aqueous solution containing 1.0 mass% of triallylamine (0.4 g) | Emulsion type (crosslinked) | 0.3 | 2.95 | 2.68 | 9.2 |
| Comparative Synthesis Example 5 Comparative Polymer 5 | DAA (40) 115 g* | AAM (60) 51 g | - | toluene solution containing 4.0 mass% of 2,2'-azobis(4-methoxy-2,4-dimethylvaleronitrile) (2.5 g) | hydrochloric acid aqueous solution containing 1.0 mass% of triallylamine (0.4 g) | Emulsion type (crosslinked) | 5.8 | 2.86 | 2.70 | 5.6 |
| Commercially available polymer A | DAM (100) | - | - | - | - | Powder type (linear) | 1.5 | 4.8 | 4.75 | 1.0 |

Regarding sludges A and B used in examples and comparative examples, properties of the sludges were measured by the following methods, and the measurement results are shown in Table 2.

(2-1) Content (mass%) of suspended solids (SS)

100 mL of the sludge was centrifuged at 3,000 rpm for 10 minutes to remove the supernatant, the precipitate was washed with water and poured into a weighed crucible, dried in a temperature range of 105 to 110°C for 15 hours, and then weighed out, and the mass of the residue remaining in the crucible after drying was determined.

The mass of the residue remaining in the crucible after drying was a mass of the suspended solids (SS) contained in 100 mL of the sludge. A ratio of the mass of the residue (suspended solids) remaining in the crucible after drying to the mass of 100 mL of the sludge before drying was a content (mass%) of SS.

(2-2) Content (mass%/SS) of ignition loss (VSS) of SS

After the mass of the residue (suspended solids) remaining in the crucible after drying was determined in the above (2-1), while the residue (suspended solids) was in the crucible, it was ignited in a temperature range of 600±25°C for 2 hours and cooled, and then weighed out, and thus the mass of the residue remaining in the crucible after ignition was determined.

The mass of the residue remaining in the crucible after ignition was a mass of non-volatile suspended solids contained in the residue (suspended solids) remaining in the crucible after drying in the above (2-1). On the other hand, a difference between the mass of the residue (suspended solids) remaining in the crucible after drying and the mass of the residue (non-volatile suspended solids) remaining in the crucible after ignition was a mass of volatile suspended solids (VSS). A ratio of the mass of the volatile suspended solids to the mass of the residue (suspended solids) remaining in the crucible after drying was a content (mass%/SS) of the VSS.

(2-3) Content (mass%) of evaporation residue (TS)

100 mL of the sludge was put into a weighed crucible, and dried in a temperature range of 105 to 110°C for 15 hours, and then weighed out, and the mass of the residue remaining in the crucible after drying was determined.

The mass of the residue remaining in the crucible after drying was a mass of the evaporation residue (total solids: TS) contained in 100 mL of the sludge. A ratio of the mass of the residue (total solid content) remaining in the crucible after drying to the mass of 100 mL of the sludge before drying was a content (mass%) of TS.

(2-4) Content (mass%/TS) of ignition loss (VTS)

After the mass of the residue (evaporation residue) remaining in the crucible after drying was determined in the above (2-3), while the residue (evaporation residue) was in the crucible, it was ignited in a temperature range of 600±25°C for 2 hours and cooled, and then weighed out, and thus the mass of the residue remaining in the crucible after ignition was determined.

The mass of the residue remaining in the crucible after ignition was a mass of the non-volatile evaporation residue contained in the residue (evaporation residue) remaining in the crucible after drying in the above (2-3). On the other hand, a difference between the mass of the residue (evaporation residue) remaining in the crucible after drying and the mass of the residue (non-volatile evaporation residue) remaining in the crucible after ignition was a mass of the volatile evaporation residue (volatile total solids: VTS). A ratio of the mass of the total volatile solid content to the mass of the residue (evaporation residue) remaining in the crucible after drying was a content (mass% /TS) of VTS.

(2-5) Content (mass%/SS) of fiber content

100 mL of the sludge was filtered through a 100-mesh (opening: 149 μm) sieve, the residue remaining on the sieve was washed with water and poured into a weighed crucible and dried in a temperature range of 105 to 110°C for 15 hours, and then weighed out, and the mass of the residue remaining in the crucible after drying was determined.

The mass of the residue remaining in the crucible after drying is a mass of suspended solids having a size of about 149 μm or more contained in 100 mL of the sludge.

Then, while the residue remaining in the crucible was in the crucible, it was ignited in a temperature range of 600±25°C for 2 hours and cooled and then weighed out, and the mass of the residue remaining after ignition was determined.

The mass of the residue remaining after ignition was a mass of non-volatile suspended solids contained in the residue (suspended solids having a size of about 149 μm or more) remaining in the crucible after drying. On the other

hand, a difference amount between the mass of the residue remaining in the crucible after drying and the mass of the residue (non-volatile suspended solids) remaining after ignition was mainly a mass of the volatile fiber content. A ratio of the mass of the volatile fiber content to the mass of the residue (suspended solids having a size of about 149 μm or more) remaining in the crucible after drying was determined as a content (mass%/SS) of the fiber content.

(2-6) pH

The pH was measured based on the operation of a glass electrode method according to JIS Z 8802:2011. Here, pH calibration was performed using commercially available pH standard solutions containing phthalate, neutral phosphate, and carbonate.

(2-7) Electrical conductivity

The electrical conductivity was measured according to JIS K 0102:2016.

[Table 2]

| | Type of sludge | Properties of sludge | | | | | | |
|---|---|---|---|---|---|---|---|---|
| | | SS content (mass%) | VSS content (mass%/SS) | TS content (mass%) | VTS content (mass%/TS) | Fiber component content (mass%/SS) | pH | Electrical conductivity (mS/m) |
| Sludge A | Mixed sludge in chemical factories | 2.1 | 69.2 | 2.3 | 67.9 | 6.2 | 5.5 | 168 |
| Sludge B | Excess sludge in food factories | 1.8 | 86.3 | 1.9 | 84.6 | 3.1 | 6.2 | 108 |

In order to evaluate Polymers 1 to 6 obtained in Synthesis Examples 1 to 6, and Comparative Polymers 1 to 5 obtained in Comparative Synthesis Examples 1 to 5, and the commercially available Polymer A, Examples 1 to 9 and Comparative Examples 1 to 9 were obtained using sludges A and B.

(Examples 1 to 3)

0.2 mass% polymer solutions were prepared using Polymers 2, 3, and 1 in the same method as in the measurement of the (1-2) intrinsic viscosity.

The 0.2 mass% polymer solution was used, and a polymer aqueous solution was added to 200 mL of the sludge A collected in a 300 mL beaker so that the addition amount was 200 mg/L (0.95 mass%/SS), the mixture was stirred at 180 rpm for 30 seconds, and flocculation flocs of Examples 1 to 3 were formed.

(Example 4)

Flocculation flocs of Example 4 were formed in the same manner as in Examples 1 to 3 except that Polymer 6 was used, and a polymer aqueous solution was added to 200 mL of the sludge A collected in a 300 mL beaker so that the addition amount was 220 mg/L (1.05 mass%/SS).

(Comparative Examples 1 to 4)

Flocculation flocs of Comparative Examples 1 to 4 were formed in the same manner as in Examples 1 to 3 except that Comparative Polymers 2, 3, and 1 and the commercially available Polymer A were used, and a polymer aqueous solution was added to 200 mL of the sludge A collected in a 300 mL beaker so that the addition amount was 220 mg/L (1.05 mass%/SS).

(Examples 5 and 6)

Flocculation flocs of Examples 5 and 6 were formed in the same manner as in Examples 1 to 3 except that Polymers 2 and 3 were used, and a polymer aqueous solution was added to 200 mL of the sludge B collected in a 300 mL beaker so that the addition amount was 140 mg/L (0.78 mass%/SS).

(Examples 7 to 9)

Flocculation flocs of Examples 7 to 9 were formed in the same manner as in Examples 1 to 3 except that Polymers 4 to 6 were used, and a polymer aqueous solution was added to 200 mL of the sludge B collected in a 300 mL beaker so that the addition amount was 160 mg/L (0.89 mass%/SS).

(Comparative Examples 5 to 9)

Flocculation flocs of Comparative Examples 5 to 9 were formed in the same manner as in Examples 1 to 3 except that Comparative Polymers 2 to 5, and the commercially available Polymer A were used, and a polymer aqueous solution was added to 200 mL of the sludge B collected in a 300 mL beaker so that the addition amount was 160 mg/L (0.89 mass%/SS).

Regarding the flocculation flocs formed in Examples 1 to 9 and Comparative Examples 1 to 9, properties of the flocculation flocs were measured by the following methods, and the measurement results are summarized in Table 3.

(3-1) Floc diameter

Regarding the flocculation flocs formed in Examples 1 to 9 and Comparative Examples 1 to 9, about 100 flocs that were able to be observed from above the beaker were used as targets, the diameters of respective flocs were measured using a measurement unit, and an average thereof was obtained.

It can be evaluated that, when the floc diameter was larger, coarser flocculation flocs were formed.

(3-2) 20-second filtration amount

A Buchner funnel (pore size: about 1 mm) with an inner diameter of 80 mm was placed on a 200 mL measuring cylinder, and additionally, a polyvinyl chloride cylinder with an inner diameter of 50 mm was placed inside the Buchner funnel. The flocculation flocs formed in Examples 1 to 9 and Comparative Examples 1 to 9 were poured into this cylinder

all at once, and the filtrate poured out through the pore of the Buchner funnel was collected in a measuring cylinder. The amount of the filtrate collected within 20 seconds from when the flocculation flocs were poured (20-second filtration amount) was measured by reading the scale of the measuring cylinder.

It can be evaluated that, when the 20-second filtration amount was larger, flocculation flocs having superior gravity filtration properties were formed.

(3-3) SS leakage amount

The SS leakage amount collected after 20 seconds from when flocculation flocs were poured in the above measurement of the 20-second filtration amount, and after 40 seconds had elapsed in succession, that is, collected after 60 seconds had elapsed from when the flocculation flocs were poured, was collected in a measuring cylinder separated from the measuring cylinder used in measurement of the above 20-second filtration amount, and measured by reading the scale of the measuring cylinder.

Here, "SS leakage amount" refers to an amount of suspended solids (SS) such as flocs having a small diameter and flocs with a weak cohesive force and a collapsed shape which leak through the pore of the Buchner funnel (pore size: about 1 mm) after 60 seconds had elapsed from when flocculation flocs are poured.

It can be evaluated that, when the SS leakage amount was smaller, stiffer and coarser flocculation flocs were formed.

However, when the SS leakage amount was large even if the 20-second filtration amount was large, it was poor for the sludge dehydration treatment. Therefore, when the dehydration performance of the polymer was determined, it was necessary to evaluate the 20-second filtration amount and the SS leakage amount as a set.

(3-4) Cake water content

After the SS leakage amount was measured, the flocculation flocs remaining in the Buchner funnel were packed in a polyvinyl chloride column (diameter: 30 mm, height: 17.5 mm), the column was then removed, and flocculation flocs formed to have a diameter of 30 mm were pressed from above with a pressure of 0.1 MPa for 60 seconds to obtain a dehydrated cake.

The mass (W1) of this dehydrated cake, and additionally, the mass (W2) of the dehydrated cake after the dehydrated cake was dried at a temperature of 105°C for 15 hours were measured, and a weight loss (W1-W2) between the mass (W1) before drying and the mass (W2) after drying was regarded as a water content of the dehydrated cake, and the cake water content was calculated by the following Mathematical Formula 3.

It can be evaluated that, when the cake water content was smaller, flocculation flocs having a smaller water content were formed, and the time and energy required for drying the flocculation flocs were able to be reduced.

Here, when the cake water content was about 80 to 85 mass%, handling the same as in the flocculation flocs obtained using conventional sludge dehydration agents was possible.

[Math. 6]

Mathematical Formula 3

$$\text{Cake water content (\%)} = \left(\frac{W1 - W2}{W1}\right) \times 100$$

[Table 3]

| | | Type of sludge | Sludge dehydration agent sample | | | Floc diameter (mm) | 20-second filtration amount (mL) | SS leakage amount (mL) | Cake water content (mass%) |
|---|---|---|---|---|---|---|---|---|---|
| | | | Type of polymer | Addition concentration | | | | | |
| | | | | (mg/L) | (mass%/SS) | | | | |
| Example | 1 | Sludge A | Polymer 2 | 200 | 0.95 | 6 to 7 | 132 | 0 | 80.8 |
| | 2 | | Polymer 3 | 200 | 0.95 | 6 | 128 | 0 | 81.1 |
| | 3 | | Polymer 1 | 200 | 0.95 | 7 to 8 | 126 | 0 | 81.3 |
| | 4 | | Polymer 6 | 220 | 1.05 | 8 | 122 | 0 | 82.1 |
| Comparative Example | 1 | | Comparative Polymer 2 | 220 | 1.05 | 5 to 6 | 115 | 10 | 82.8 |
| | 2 | | Comparative Polymer 3 | 220 | 1.05 | 6 | 118 | 15 | 83.1 |
| | 3 | | Comparative Polymer 1 | 220 | 1.05 | 6 to 7 | 128 | 25 | 83.3 |
| | 4 | | Commercially available polymer A | 220 | 1.05 | 4 to 5 | 126 | 25 | 84.0 |

(continued)

| | | Type of sludge | Sludge dehydration agent sample: Type of polymer | Addition concentration (mg/L) | Addition concentration (mass%/SS) | Floc diameter (mm) | 20-second filtration amount (mL) | SS leakage amount (mL) | Cake water content (mass%) |
|---|---|---|---|---|---|---|---|---|---|
| Example | 5 | Sludge B | Polymer 2 | 140 | 0.78 | 6 to 7 | 146 | 0 | 81.8 |
| | 6 | | Polymer 3 | 140 | 0.78 | 6 | 140 | 0 | 81.9 |
| | 7 | | Polymer 4 | 160 | 0.89 | 7 to 8 | 138 | 0 | 82.3 |
| | 8 | | Polymer 5 | 160 | 0.89 | 5 to 6 | 138 | 2 | 82.4 |
| | 9 | | Polymer 6 | 160 | 0.89 | 8 | 132 | 0 | 82.4 |
| Comparative Example | 5 | | Comparative Polymer 2 | 160 | 0.89 | 6 | 128 | 0 | 83.4 |
| | 6 | | Comparative Polymer 3 | 160 | 0.89 | 5 to 6 | 134 | 10 | 83.6 |
| | 7 | | Comparative Polymer 4 | 160 | 0.89 | 4 to 5 | 138 | 30 | 84.5 |
| | 8 | | Comparative Polymer 5 | 160 | 0.89 | 6 to 7 | 112 | 25 | 84.7 |
| | 9 | | Commercially available polymer A | 160 | 0.89 | 4 to 5 | 128 | 25 | 84.9 |

(Summary of results)

Based on the measurement results shown in Table 3, the following can be understood.

In the measurement results in which the sludge type was the sludge A, even if the addition amounts of the Polymer 6, Comparative Polymers 1 to 3, and the commercially available Polymer A were the same, in Comparative Polymers 1 to 3, and the commercially available Polymer A, there was a tendency in which the floc diameter was small, the SS leakage was measured, and the cake water content was high because the colloid equivalent value decrease rate defined in this specification was less than 10%.

On the other hand, in Polymer 6, there was a tendency in which the floc diameter was large, no SS leakage was measured, the 20-second filtration amount was large, and the cake water content was low because the polymer had the colloid equivalent value decrease rate (10% or more) defined in this specification.

In addition, in the measurement results in which the sludge type was the sludge A, even though the addition amounts of Polymers 1 to 3 were smaller than those of Comparative Polymers 1 to 3, and the commercially available Polymer A, in Polymers 1 to 3, there was a tendency in which the floc diameter was large, no SS leakage was measured, the 20-second filtration amount was large, and the cake water content was low because the polymers had the colloid equivalent value decrease rate (10% or more) defined in this specification.

Furthermore, it was found that, among Polymers 1 to 3, and Polymer 6 having the colloid equivalent value decrease rate (10% or more) defined in this specification, even though the addition amounts of Polymers 1 to 3 having a specific intrinsic viscosity (0.5 to 5.0 dL/g) were smaller than that of Polymer 6, a stronger effect was obtained in Polymers 1 to 3.

In addition, in the measurement results in which the sludge type was the sludge A, it was found that, in crosslinked Polymers 2 and 3, there was a tendency in which the 20-second filtration amount was larger than that of linear Polymers 1 and 6, the cake water content was low, and a stronger effect was obtained.

In the measurement results in which the sludge type was the sludge B, even if the addition amounts of Polymers 4 to 6, Comparative Polymers 2 to 5, and the commercially available Polymer A were the same, in Comparative Polymers 2 to 5, and the commercially available Polymer A, there was a tendency in which the floc diameter was small, the SS leakage was measured or the 20-second filtration amount was small, and the cake water content was high because the colloid equivalent value decrease rate defined in this specification was less than 10%.

On the other hand, in Polymers 4 to 6, there was a tendency in which the floc diameter was large, the SS leakage was unlikely to be measured, the 20-second filtration amount was large, and the cake water content was low because the polymers had the colloid equivalent value decrease rate (10% or more) defined in this specification.

In addition, in the measurement results in which the sludge type was the sludge B, even though the addition amounts of Polymers 2 and 3 were smaller than those of Comparative Polymers 2 to 5, and the commercially available Polymer A, in Polymers 2 and 3, there was a tendency in which the floc diameter was large, no SS leakage was measured, the 20-second filtration amount was large, and the cake water content was low because the polymers had the colloid equivalent value decrease rate (10% or more) defined in this specification.

Furthermore, it was found that, among Polymers 2 to 6 having the colloid equivalent value decrease rate (10% or more) defined in this specification, even though the addition amounts of Polymers 2 and 3 having a specific intrinsic viscosity (0.5 to 5.0 dL/g) were smaller than those of Polymers 4 to 6, a stronger effect was obtained.

## Claims

1. A sludge dehydration agent which contains a polymer having a constituent unit derived from a cationic monomer, wherein a colloid equivalent value decrease rate of the polymer calculated by the following Mathematical Formula 1 is 10% or more:
[Math. 1]

Mathematical Formula 1

$$\text{Colloid equivalent value decrease rate (\%)} = \left(1 - \frac{\text{Colloid equivalent value (II)}}{\text{Colloid equivalent value (I)}}\right) \times 100$$

(in Mathematical Formula 1, the colloid equivalent value (I) is a colloid equivalent value at a pH of 4 measured in deionized water using a colloid titration method; and the colloid equivalent value (II) is a colloid equivalent value at a pH of 4 measured in 0.01 mol/L salt water using a colloid titration method).

**2.** The sludge dehydration agent according to claim 1, wherein the polymer has an intrinsic viscosity of 0.5 to 5.0 dL/g in a 1 mol/L aqueous sodium nitrate solution at 30C.

**3.** The sludge dehydration agent according to claim 1 or 2, wherein monomers constituting the polymer are composed of 1 to 100 mol% of a cationic monomer represented by the following General Formula (1), 0 to 99 mol% of a nonionic monomer, and 0 to 99 mol% of an anionic monomer represented by the following General Formula (2):

[Chem. 1]

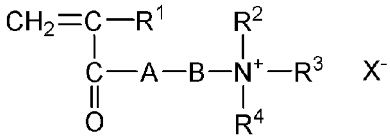 (1)

(in Formula (1), $R^1$ represents a hydrogen atom or a methyl group, $R^2$ and $R^3$ each independently represent an alkyl group, alkoxy group or benzyl group having 1 to 3 carbon atoms, $R^4$ represents a hydrogen atom or an alkyl group, alkoxy group or benzyl group having 1 to 3 carbon atoms; A represents an oxygen atom or an NH group, and B represents an alkylene group having 2 to 4 carbon atoms; and $X^-$ represents an anion),

[Chem. 2]

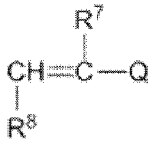 (2)

(in Formula (2), $R^7$ represents H or CH3, $R^8$ represents H, CH3, COOH or salts thereof; Q represents $SO_3H$, $C_6H_4SO_3H$, $CONHC(CH_3)_2CH_2SO_3H$, COOH or salts thereof).

**4.** The sludge dehydration agent according to any one of claims 1 to 3, wherein the sludge dehydration agent contains two or more of the polymers.

**5.** The sludge dehydration agent according to any one of claims 1 to 4, wherein the sludge dehydration agent contains at least one polymer having a colloid equivalent value decrease rate of less than 10%.

**6.** A sludge dehydration method, comprising adding the sludge dehydration agent according to any one of claims 1 to 5 to a sludge, and performing dehydration.

## INTERNATIONAL SEARCH REPORT

International application No.
PCT/JP2019/021493

### A. CLASSIFICATION OF SUBJECT MATTER

Int.Cl. C02F11/147(2019.01)i, B01D21/01(2006.01)i, C08F220/34(2006.01)i

According to International Patent Classification (IPC) or to both national classification and IPC

### B. FIELDS SEARCHED

Minimum documentation searched (classification system followed by classification symbols)
Int.Cl. C02F11/00-11/20, B01D21/01, C02F1/52-1/56, C08C19/00-19/44, C08F6/00-246/00, C08F301/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2012-170853 A (SANYO CHEMICAL INDUSTRIES, LTD.) 10 September 2012, claims 1, 7 (Family: none) | 1-2, 6<br>3-5 |
| A | JP 2009-280649 A (HYMO CORP.) 03 December 2009 (Family: none) | 1-6 |
| A | JP 2005-144346 A (HYMO CORP.) 09 June 2005 (Family: none) | 1-6 |
| A | JP 2011-224420 A (DAIYANITORIKKUSU KK.) 10 November 2011 (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 July 2019 (17.07.2019) | 30 July 2019 (30.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009280649 A
- JP 2005144346 A
- WO 2008015769 A
- JP 2011224420 A
- JP S63158200 B